Europäisches Patentamt

European Patent Office

Office européen des brevets

(19)

(11) Numéro de publication : **0 097 068**
**B1**

(12) **FASCICULE DE BREVET EUROPÉEN**

(45) Date de publication du fascicule du brevet :
01.10.86

(51) Int. Cl.⁴ : **H 04 N 9/76**

(21) Numéro de dépôt : **83400967.2**

(22) Date de dépôt : **11.05.83**

(54) Système d'incrustation d'images en télévision en couleurs.

(30) Priorité : **17.05.82 FR 8208568**

(43) Date de publication de la demande :
**28.12.83 Bulletin 83/52**

(45) Mention de la délivrance du brevet :
**01.10.86 Bulletin 86/40**

(84) Etats contractants désignés :
**BE CH DE GB IT LI NL SE**

(56) Documents cités :
**EP-A- 0 014 665**

(73) Titulaire : **Etablissement Public TELEDIFFUSION DE FRANCE**
**10, rue d'Oradour-sur-Glane**
**F-75732 Paris Cédex 15 (FR)**

(72) Inventeur : **Macheboeuf, Guy**
**Val d'Haumont 37, Allée des Pins**
**F-27 130 Pullay par Verneuil sur Avre (FR)**

(74) Mandataire : **Martinet & Lapoux**
**62, rue des Mathurins**
**F-75008 Paris (FR)**

EP 0 097 068 B1

## Description

La présente invention concerne un système d'incrustation d'images en télévision en couleurs pour combiner des premiers signaux composants représentatifs d'une image composite d'une avant-scène et d'un fond et des seconds signaux composants représentatifs d'une image d'arrière-scène en des signaux composants représentatifs d'une image résultant de l'incrustation de l'image d'avant-scène dans l'image d'arrière-scène, ledit système comprenant des premiers moyens pour incruster une image issue de l'image d'avant-scène dans l'image d'arrière-scène en fonction des différences de couleurs de l'image d'avant-scène et du fond.

Dans les systèmes d'incrustation connus, tels que ceux décrits dans la EP-B-0.014.665 (ou le US-A-4.292.649), le US-A-3.778.542, le US-A-4.007.487, la DE-A-2.749.154 et la FR-A-2.128.156, les signaux composants de ladite image issue de l'image d'avant-scène sont obtenus soit directement à partir des signaux composants correspondants représentatifs de l'image d'avant-scène, à travers des atténuateurs respectifs parfois variables, soit à partir d'au moins une combinaison linéaire des signaux composants de l'image d'avant-scène. Ces systèmes discriminent la couleur généralement saturée du fond par rapport aux couleurs de l'image d'avant-scène afin de fournir un signal de commande de gain destiné à distinguer le fond et l'image d'avant-scène en vue de supprimer le fond et le remplacer par l'image d'arrière-scène.

Pour des raisons diverses, notamment de facilité d'exploitation, la couleur du fond qui est l'arrière-plan de l'image d'avant-scène ou sujet est une couleur très saturée. Dans la très grande majorité des cas le bleu est choisi. L'image composite composée par l'image d'avant-scène et le fond est délivrée par une caméra située sur un plateau où l'image d'avant-scène ou sujet est placée devant un panneau bleu au fond d'un studio et évolue sur un plancher également bleu. L'éclairage de l'ensemble doit permettre d'obtenir un fond de couleur très uniforme. Cependant il apparaît une lumière réfléchie et diffuse importante provenant du panneau et du plancher. Cette lumière a une dominante bleue. Elle confère dans l'image d'avant-scène ou sujet d'une part de nombreux reflets bleus dénaturant les couleurs réelles de l'image d'avant-scène et d'autre part, un liséré qui s'élargit notablement dans les cheveux de personnes de l'avant-scène et qui peut encore apparaître après l'incrustation à la transition de l'image d'avant-scène et de l'image d'arrière-scène. Une transparence bleutée analogue au liséré précédent apparaît également lorsque l'avant-scène contient des objets transparents, quel que soit le système d'incrustation connu utilisé.

Le but de la présente invention est d'obvier aux inconvénients précédents en atténuant, voire même supprimer totalement, les reflets et la dominante des transparences ayant comme couleur prédominante celle du fond dans l'image d'avant-scène après incrustation.

A cette fin, un système d'incrustation d'images en télévision en couleurs du type ci-dessus est caractérisé en ce qu'il comprend des moyens pour combiner des proportions prédéterminées de premiers signaux composants avec une proportion prédéterminée de l'un des seconds signaux composants en des troisièmes signaux composants et des seconds moyens pour incruster l'image représentée par les troisièmes signaux composants dans l'image d'avant-scène en des signaux composants représentatifs de ladite image issue de l'image d'avant-scène en fonction des différences de couleurs de l'image d'avant-scène et du fond.

Selon l'invention, préalablement à l'incrustation finale dans les premiers moyens d'incrustation, une couleur de l'image d'arrière-scène, de préférence différente de celle du fond, est combinée avec certaines couleurs de l'image composite d'avant-scène et de fond. Les seconds moyens d'incrustation déterminent les zones où sont créées de fausses couleurs au niveau des transitions entre l'image d'avant-scène et le fond. Dans les transitions, la prédominance de la couleur du fond est très atténuée. Après l'incrustation finale, au niveau desdites transitions ou d'un objet transparent, les couleurs sont modifiées progressivement de sorte que le téléspectateur ne voit plus le liséré ou les reflets dus au fond monochromatique mais plutôt un léger flou s'intégrant parfaitement avec les couleurs de l'image d'arrière-scène et de l'image d'avant-scène.

· D'autres caractéristiques et avantages de la présente invention apparaîtront plus clairement à la lecture de la description qui suit de plusieurs modes de réalisation de l'invention en référence aux dessins annexés correspondants, dans lesquels :

la Figure 1 est un bloc-diagramme d'un système d'incrustation selon l'invention traitant chaque image sous forme de trois signaux composants primaires de couleurs monochromatiques ;

la Figure 2 est un bloc-diagramme détaillé du premier circuit de traitement de la Fig. 1 ;

la Figure 3 est un bloc-diagramme d'un autre système d'incrustation selon l'invention traitant chaque image sous forme de trois signaux composants dont l'un est le signal de luminance et dont les deux autres sont les signaux de chrominance ;

la Figure 4 est un bloc-diagramme détaillé du premier circuit de traitement de la Fig. 3 ; et

la Figure 5 montre un signal de différence de couleur à niveau uniforme généré par le circuit de traitement de la Fig. 4.

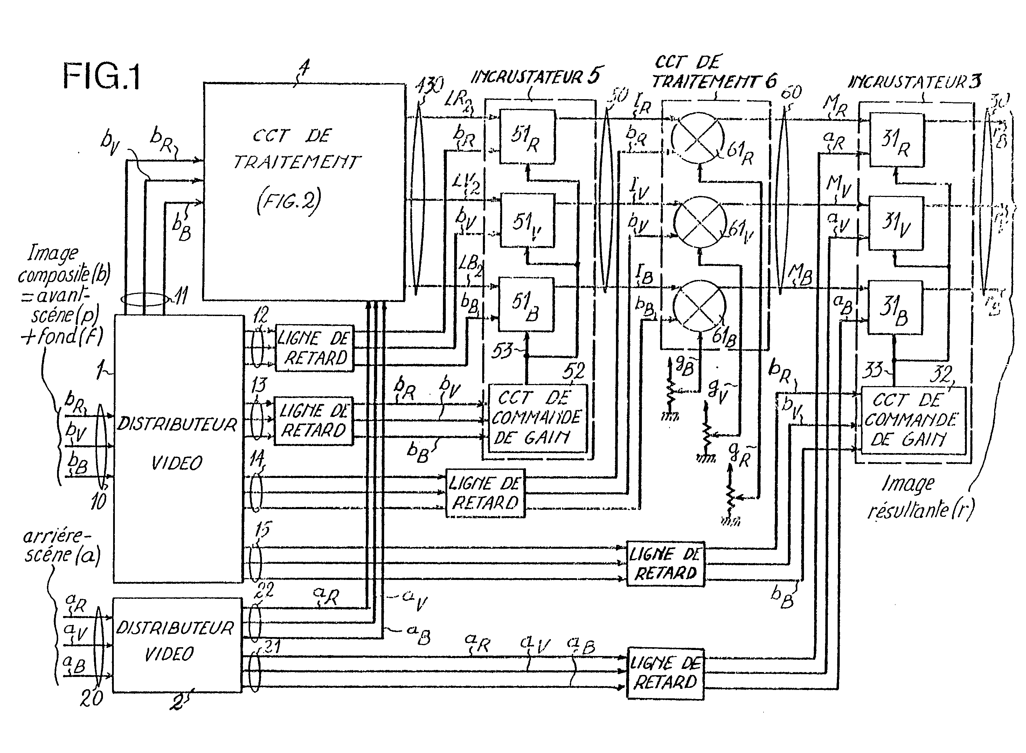

En référence à la Fig. 1, le système d'incrustation reçoit directement, ou par l'intermédiaire de moyens vidéo de séparation, les signaux primaires séparés $b_R$, $b_V$ et $b_B$ représentatifs d'une image composite b d'avant-scène et de fond sur un premier bus d'entrée à trois fils 10 à partir d'une première source vidéo et les signaux primaires séparés $a_R$, $a_V$ et $a_B$ représentatifs d'une image d'arrière-scène a sur un second bus d'entrée à trois fils 20 à partir d'une seconde source vidéo. Les indices R, V et B désignent les signaux primaires d'une image en couleurs assignés respectivement aux couleurs rouge, verte et bleue. La première source vidéo est par exemple une première caméra qui filme une image d'avant-scène telle qu'un sujet ou personnage p qui évolue devant un fond coloré f. Dans de nombreux cas pratiques — auxquels on se référera dans la suite — le fond f est constitué par un panneau et un plancher ayant une couleur saturée uniforme telle que le bleu. Cependant, le fond f peut être trichromatique ; dans ce cas, les domaines colorimétriques de l'image d'avant-scène et du fond dans le système cartésien trichromatique classique relatif aux trois coordonnés monochromatiques R, V et B sont sensiblement disjoints. La seconde source vidéo est par exemple une seconde caméra, un magnétoscope ou un transmetteur de diapositives qui restitue les signaux primaires de l'image d'arrière-scène telle qu'un décor a.

Comme il est connu, le système d'incrustation restitue sur un bus de sortie à trois fils 30 les trois signaux primaires $r_R$, $r_V$ et $r_B$ de l'image résultant du remplacement du fond par l'image d'arrière-scène. L'image résultante r est donc composée du personnage p évoluant devant le décor a.

Les trois signaux primaires $b_R$, $b_V$ et $b_B$ de l'image composite d'avant-scène et de fond sur le premier bus d'entrée 10 sont répétés sur cinq bus à trois fils chacun 11, 12, 13, 14 et 15 par un premier distributeur vidéo de signaux primaires 1. Les trois signaux primaires $a_R$, $a_V$ et $a_B$ de l'image d'arrière-scène sur le second bus d'entrée 20 sont répétés sur deux bus à trois fils chacun 21 et 22 par un second distributeur vidéo de signaux primaires 2.

Outre les deux distributeurs d'entrée 1 et 2, le système d'incrustation comprend un incrustateur de sortie connu 3 — appelé premiers moyens pour incruster dans le préambule de la description ci-dessus — et une combinaison d'un premier circuit de traitement 4 et d'un incrustateur 5, constituant tous deux l'objet principal de la présente invention, et, de préférence d'un second circuit de traitement 6, qui est ajoutée entre les distributeurs d'entrée 1, 2 et l'incrustateur de sortie 3.

Si on fait abstraction de la combinaison des circuits 4, 5 et 6, le système d'incrustation est alors analogue à ceux décrits dans la EP-B-0.014.665 et sa structure est rappelée ci-dessous.

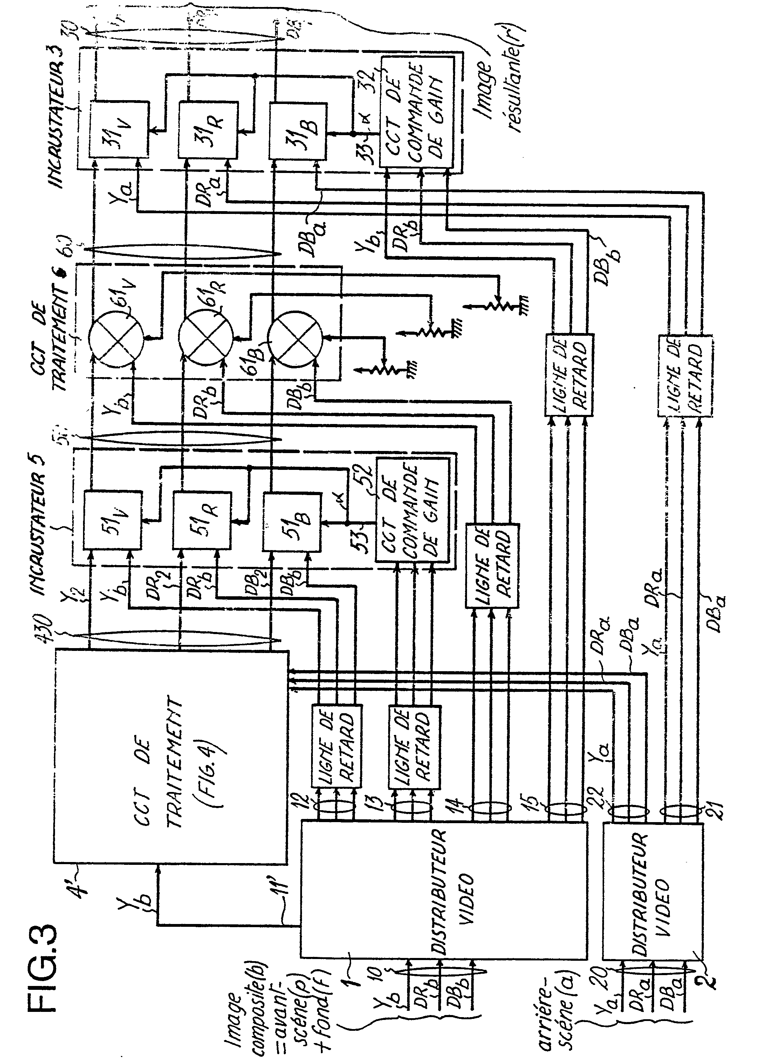

L'incrustateur 3 comprend trois circuits de commutation à gain variable — ou à vitesse de commutation variable — $31_R$, $31_V$ et $31_B$. Chacun des circuits de commutation $31_R$, $31_V$, $31_B$ comprend des premier et second amplificateurs à gain variable et un mélangeur de sortie. Le premier amplificateur à gain variable reçoit le signal primaire respectif $b_R$, $b_V$, $b_B$ de l'image composite d'avant-scène et de fond b = p + f — ou, plus généralement, d'une image issue de l'image d'avant-scène — sur le bus 11. Le second amplificateur à gain variable reçoit le signal primaire respectif $a_R$, $a_V$, $a_B$ de l'image d'arrière-scène a sur le bus 21. Le mélangeur de sortie du circuit de commutation mélange les signaux primaires sortant des deux amplificateurs en le signal primaire respectif $r_R$, $r_V$, $r_B$ de l'image résultante r. Un circuit de commutation 31 est analogue à la combinaison des circuits respectifs $5_b$, $5_a$, $52_b$ et d'une partie respective du mélangeur 6′ montrée à la Fig. 4 de la EP-B-0.014.665.

L'incrustateur 3 comprend également un circuit de commande de gain 32 qui est analogue à celui 4 montré à la Fig. 1 de la EP-B-0.014.665. Le circuit 32 reçoit les trois signaux primaires $b_R$, $b_V$ et $b_B$ de l'image composite d'avant-scène et de fond b = p + f sur le bus 15. La sortie 33 du circuit 32 délivre un signal de commande de gain analogique $\alpha$ qui est appliqué directement aux entrées de commande de gain des seconds amplificateurs des circuits de commutation $31_R$, $31_V$ et $31_B$ et, à travers des circuits inverseurs analogiques qui fournissent le signal complémentaire $(1 - \alpha)$, aux entrées de commande de gain des premiers amplificateurs des circuits de commutation $31_R$, $31_V$ et $31_B$.

Le signal de commande analogique $\alpha$ a des premier et second niveaux et des niveaux intermédiaires entre ces deux niveaux. Le signal $\alpha$ est au premier niveau dit bas « O », lorsque le signal vidéo composite b constitué par les signaux primaires $b_R$, $b_V$ et $b_B$ est représentatif de l'image d'avant-scène p, celle-ci étant alors transmise par les premiers amplificateurs des circuits 31. Le signal $\alpha$ est au second niveau dit haut « 1 », lorsque le signal vidéo composite b est représentatif de l'image de fond f ; le fond f n'est pas délivré par les premiers amplificateurs des circuits 31 tandis que les signaux $a_R$, $a_V$ et $a_B$ représentatifs de l'image d'arrière-scène a sont délivrés par les seconds amplificateurs des circuits 31. Un niveau intermédiaire du signal de commande $\alpha$ correspond à un point du domaine de transition trichromatique entre le domaine colorimétrique de l'image de fond f et le domaine colorimétrique de l'image d'avant-scène p. Le domaine de transition correspond à une zone de flou telle que celle d'un objet transparent de l'image p à travers lequel transparaît le fond f. Ainsi, dans le domaine de transition, pour des points voisins de l'image d'arrière-scène, l'influence de celle-ci augmente par une amplification des seconds amplificateurs supérieure à celle des premiers amplificateurs des circuits de commutation 31 ; réciproquement, l'influence de l'image d'avant-scène p pour des points du domaine de transition proches du domaine colorimétrique de l'image p augmente par une amplification des premiers amplificateurs supérieure à celle des seconds amplificateurs des circuits de commutation 31.

Les circuits 4, 5 et 6 selon l'invention sont maintenant décrits.

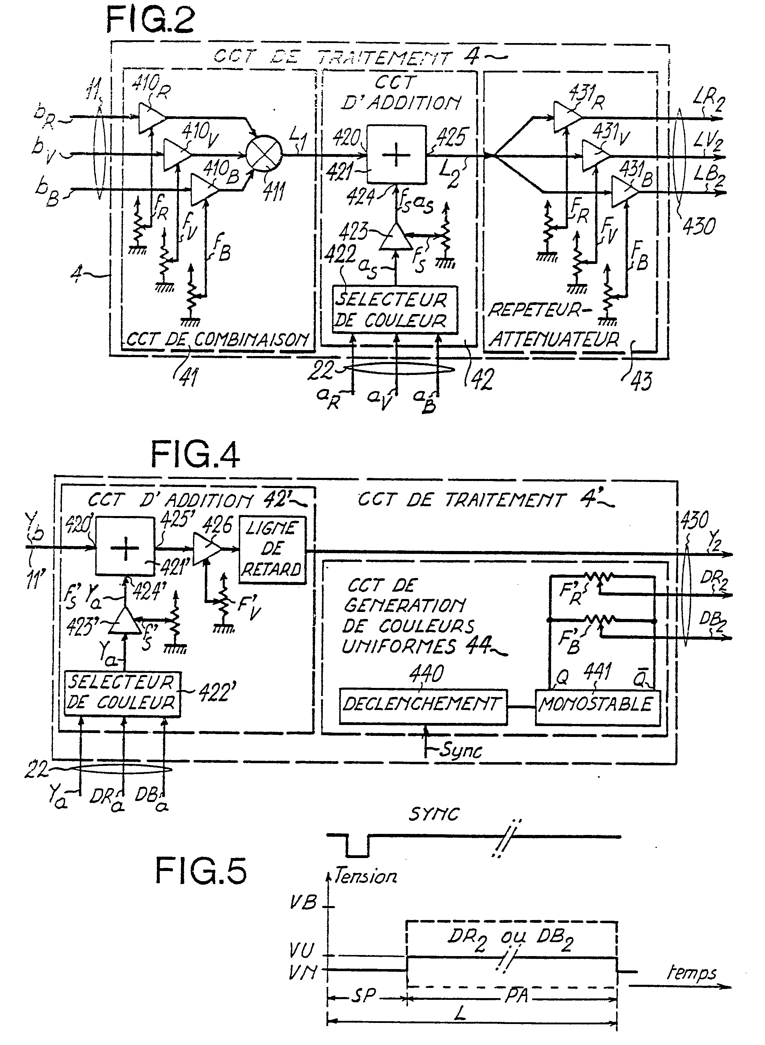

La fonction du premier circuit de traitement 4 consiste essentiellement en la combinaison de proportions adjustables des amplitudes de certains signaux primaires $b_R$, $b_V$ et $b_B$ avec une proportion adjustable de l'amplitude de l'un des signaux $a_R$, $a_V$ et $a_B$. Le circuit 4 est montré à la Fig. 2. Il comprend successivement un circuit de combinaison à trois entrées 41, un circuit d'addition à deux entrées 42 et un répéteur-atténuateur à trois sorties 43. Le circuit 42 produit en sortie un signal $L_2$ résultant d'une combinaison de signaux primaires $b_R$, $b_V$, $b_B$ de l'image composite d'avant-scène et de fond et de l'un des signaux primaires $a_R$, $a_V$ et $a_B$ de l'image d'arrière-scène. le circuit de combinaison 41 comprend trois atténuateurs — ou amplificateurs — réglables $410_R$, $410_V$ et $410_B$ qui reçoivent les trois signaux $b_R$, $b_V$ et $b_B$ sur le bus 11 respectivement et qui atténuent ces signaux avec des facteurs d'atténuation réglables $f_R$, $f_V$ et $f_B$ respectivement. A la sortie du circuit de combinaison 41, les trois signaux atténués précédents sont mélangés dans un mélangeur 411 en un signal de luminance $L_1 = f_R \cdot b_R + f_V \cdot b_V + f_B \cdot b_B$. Le signal $L_1$ est appliqué à l'une 420 des entrées d'un additionneur 421 qui est inclus dans le circuit d'addition 42. Du côté de l'autre entrée du circuit d'addition 42, un sélecteur de couleur 422 reçoit les signaux primaires $a_R$, $a_V$ et $a_B$ de l'image d'arrière-scène sur le bus 22 et sélectionne l'un de ces signaux. Le signal primaire sélectionné $a_S$ est de préférence atténué d'un facteur $f_S$ — ou amplifié — par un atténuateur variable 423 qui applique le signal atténué $f_S a_S$ à la seconde entrée 424 de l'additionneur 421. La sortie 425 de l'additionneur 421 délivre le signal de luminance $L_2 = L_1 + f_S a_S$ à l'entrée du récepteur-atténuateur 43. Ce dernier circuit répète le signal $L_2$ et l'atténue — ou l'amplifie — proportionnellement à trois facteurs adjustables $F_R$, $F_V$ et $F_B$ d'atténuateurs — ou amplificateurs — variables $431_R$, $431_V$, $431_B$ pour fournir sur les trois fils de sortie d'un bus 430 des signaux $LR_2 = F_R \cdot L_2$, $LV_2 = F_V \cdot L_2$ et $LB_2 = F_B \cdot L_2$ respectivement.

En se reportant à nouveau à la Fig. 1, l'incrustateur 5 — appelé seconds moyens pour incruster dans le préambule de la description ci-dessus — est identique à l'incrustateur 3. Il comprend comme ce dernier trois circuits de commutation à gain variable — ou à vitesse de commutation variable — $51_R$, $51_V$ et $51_B$ ainsi qu'un circuit de commande de gain 52. Les premiers amplificateurs à gain variable des circuits $51_R$, $51_V$ et $51_B$ reçoivent les signaux de luminance respectifs $LR_2$, $LV_2$ et $LB_2$ sur le bus 430. Les seconds amplificateurs à gain variable des circuits $51_R$, $51_V$ et $51_B$ reçoivent les signaux primaires respectifs $b_R$, $b_V$ et $b_B$ sur le bus 12. Le circuit de commande de gain 52 reçoit des signaux primaires $b_R$, $b_V$ et $b_B$ sur le bus 13 et délivre le signal $\alpha$ sur le fil 53 pour commander directement les gains des seconds amplificateurs des circuits $51_R$, $51_V$ et $51_B$ et à travers des inverseurs analogiques les gains des premiers amplificateurs des circuits $51_R$, $51_V$ et $51_B$.

Des signaux primaires respectifs $I_R$, $I_V$ et $I_B$ sortent des circuits de commutation $51_R$, $51_V$ et $51_B$ et sont appliqués à travers un bus à trois fils 50 à des premières entrées de mélangeurs respectifs $61_R$, $61_V$ et $61_B$ qui sont inclus dans le second circuit de traitement 6. Les autres entrées des mélangeurs $61_R$, $61_V$ et $61_B$ reçoivent les signaux primaires $b_R$, $b_V$ et $b_B$ de l'image composite d'avant-scène et de fond $b = p + f$ sur le bus 14 respectivement. Chacun des mélangeurs $61_R$, $61_V$ et $61_B$ est composé de premier et second amplificateurs à gain variable et d'un additionneur de sortie. Le premier amplificateur à gain variable du mélangeur $61_R$, $61_V$, $61_B$ reçoit le signal respectif $I_R$, $I_V$, $I_B$ sortant de l'incrustateur 5. Le second amplificateur à gain variable du mélangeur $61_R$, $61_V$, $61_B$ reçoit le signal primaire respectif $b_R$, $b_V$, $b_B$ de l'image composite d'avant-scène et de fond sur le bus 14. Les deux signaux composants respectifs $I_R$ et $b_R$, $I_V$ et $b_V$, $I_B$ et $b_B$ sont additionnés dans l'additionneur de sortie du mélangeur $61_R$, $61_V$, $61_B$ qui produit un signal respectif $M_R$, $M_V$, $M_B$. Le gain respectif $g_R$, $g_V$, $g_B$ du second amplificateur du mélangeur $61_R$, $61_V$, $61_B$ est réglé au moyen d'un potentiomètre. A partir de ce dernier gain, un circuit inverseur analogique produit le gain respectif du premier amplificateur qui est égal à $1 - g_R$, $1 - g_V$, $1 - g_B$.

Les signaux primaires résultant du traitement précédent dans le circuit 6 sont :

$$M_R = (1 - g_R) I_R + g_R b_R$$

$$M_V = (1 - g_V) I_V + g_V b_V$$

$$M_B = (1 - g_B) I_B + g_B b_B$$

et sont appliqués aux entrées des premiers amplificateurs à gain variable des circuits de commutation respectifs $31_R$, $31_V$ et $31_B$ de l'incrustateur de sortie 3 via un bus à trois fils 60. Les entrées des seconds amplificateurs à gain variable des circuits de commutation $31_R$, $31_V$ et $31_B$ reçoivent, comme déjà dit, les signaux primaires $a_R$, $a_V$ et $a_B$ de l'image d'arrière-scène sur le bus 21.

A titre d'exemple non limitatif, on suppose que l'image d'avant-scène p est filmée par la première caméra devant un fond bleu saturé f. L'image d'avant-scène p a pour couleur principale du rouge et ne contient pas de bleu saturé sauf pour certaines parties transparentes ou translucides telles qu'un verre ou des cheveux échevelés à travers lesquelles le bleu du fond est atténué. Le rouge de l'image d'avant-scène présente des reflets bleus qu'il convient d'éliminer ou du moins d'atténuer. Dans l'image résultante r obtenue par un système d'incrustation connu — sans les circuits 4, 5 et 6 — l'image d'arrière-scène a apparaît à travers les parties transparentes de l'image d'avant-scène p avec une dominante bleue qu'il convient aussi d'éliminer.

Le premier circuit de traitement 4 est destiné à créer une image monochrome issue d'une combinaison sélectionnée des images b et a. La combinaison réalisée par le circuit de combinaison 41 est différente de celle connue pour obtenir le signal de luminance d'une image quelconque en couleurs et peut être telle que :

$$f_R = 0,0 \; ; \; f_V = 0,6 \; ; \; f_B = 0,4$$

soit

$$L_1 = 0,6 \, b_V + 0,4 \, b_B$$

Dans le circuit d'addition 42 est ajouté au signal de luminance $L_1$ une certaine proportion $f_S$ du signal primaire rouge $a_R$ qui est sélectionné par le sélecteur 422 : $a_S = a_R$. La proportion $f_S$ est obtenue par le réglage de l'atténuation de l'atténuateur — ou amplificateur — 423 et est égale à 0,5 pour le présent exemple. Le signal de luminance résultant $L_2$ en sortie 425 du circuit d'addition 42 est ainsi :

$$L_2 = 0,6 \, b_V + 0,4 \, b_B + 0,5 \, a_R$$

Les facteurs $F_R$, $F_V$ et $F_B$ sont égaux par exemple à 1,1 et 0,4, afin que dans l'image représentée par les signaux primaires $l_R$, $l_V$ et $l_B$ sur le bus 50 et obtenue par l'incrustation des signaux de luminance $LR_2$, $LV_2$ et $LB_2$ dans les signaux primaires $b_R$, $b_V$ et $b_B$ dans l'incrustateur 5, toutes les parties transparentes de l'image d'avant-scène p « polluées » par le bleu du fond f soient remplacées par la zone correspondante d'une image dont les composantes primaires sont $LR_2$, $LV_2$, $LB_2$.

Puis dans le second circuit de traitement 6, le réglage des gains $g_R$, $g_V$ et $b_B$ des mélangeurs $61_R$, $61_V$ et $61_B$ sont fonction de l'équilibrage des couleurs des transitions et des transparences par rapport à la couleur dominante de l'image d'arrière-scène a. Comme déjà dit, la sélection colorimétrique au moyen du circuit de commande de gain 32 dans l'incrustateur de sortie 3 est faite à partir des signaux primaires $b_R$, $b_V$ et $b_B$ de l'image composite d'avant-scène et de fond b sur le bus 15 afin de remplacer le fond bleu f de l'image composite b par des zone homologues de l'image d'arrière-scène a. Dans les zones de l'image résultante r sur le bus 30 correspondant aux zones initialement « polluées » par le fond, les couleurs sont étagées, et non plus à prédominance bleue, afin d'harmoniser la transition entre les couleurs de l'image d'avant-scène et les couleurs de l'image d'arrière-scène dans laquelle est incrustée l'image d'avant-scène.

Dans le cadre de la présente invention, le système d'incrustation tel que décrit en référence à la Fig. 1 peut être modifié par l'homme du métier afin de l'adapter à tout autre système de coordonnées colorimétriques se déduisant du système R, V, B par des relations linéaires. La Fig. 3 montre un système d'incrustation selon l'invention qui se rapporte au système colorimétrique Y, DR, DB où Y est le signal de luminance et DR et DB les signaux de chrominance ou dits également de différence de couleur relatifs au rouge et au bleu d'un signal vidéo composite.

En référence à la Fig. 3, le bus 10 fournit les signaux composants $Y_b$, $DR_b$ et $DB_b$ de l'image composite d'avant-scène et de fond au distributeur 1 qui les restitue sur les bus à trois fils 12, 13, 14 et 15 et qui restitue le signal de luminance $Y_a$ sur un unique fil 11'. Les signaux composants $Y_a$, $DR_a$ et $DB_a$ de l'image d'arrière-scène sont fournis par le bus 20 au distributeur 2 qui les restitue sur les bus 21 et 22. Le système d'incrustation selon la Fig. 3 comprend un circuit de traitement 4' sensiblement différent de celui 4 de la Fig. 2, ainsi qu'un incrustateur 5, un circuit de traitement 6 et un incrustateur 3 qui sont identiques à ceux de la Fig. 1. Dans les circuits 5, 6 et 3 de la Fig. 3, les circuits composants $51_R$, $61_R$, $31_R$ et $51_B$, $61_B$, $31_B$ traitent des signaux de différence de couleur relatifs au rouge et au bleu, tandis que les circuits composants $51_V$, $61_V$, $31_V$ traitent des signaux de luminance. L'agencement des circuits 5, 6 et 3 de la Fig. 3 est identique à celui des circuits 5, 6 et 3 de la Fig. 1. On ne décrira donc en détail que le circuit le traitement 4' montré à la Fig. 4.

Le circuit 4' comprend un circuit d'addition 42' et un circuit de génération de deux couleurs uniformes 44.

Le circuit d'addition 42' est analogue au circuit 42 de la Fig. 2 et comprend un additionneur 421' à deux entrées, un sélecteur de couleur 422' et un atténuateur — ou amplificateur — variable 423' qui sont agencés les uns par rapport aux autres comme les circuits 421, 422 et 423. Le signal de luminance $Y_b$ sur le fil 11' est appliqué à l'une des entrées 420' de l'additionneur 421'. Du côté de l'autre entrée du circuit d'addition 42', le sélecteur de couleur 422' sélectionne le signal de luminance $Y_a$ de l'image d'arrière-scène sur le bus 22, lequel est atténué dans l'atténuateur — ou amplificateur — variable 423' d'un facteur ajustable $f'_S$. Le signal $f'_S \cdot Y_a$ sortant de l'atténuateur 423' est appliqué à la seconde entrée 424' de l'additionneur 421'. La sortie 425' de l'additionneur 421' est reliée à l'entrée d'un atténuateur — ou amplificateur — variable 426 ayant un facteur d'atténuation réglable $F'_V$. L'atténuateur 426 fournit donc le signal $Y_2 = (Y_b + f'_S \cdot Y_a) \, F'_V$ à l'entrée du premier amplificateur du circuit de commutation $51_V$ de l'incrustateur 5 via un fil du bus 430.

Le circuit 44 comprend en entrée un circuit 440 qui reçoit le signal de synchronisation de ligne (sync) pilotant l'ensemble des signaux traités et qui produit une impulsion convenable pour déclencher un circuit monostable 441. Le créneau sortant du circuit 441 a une largeur égale à la partie active PA — ou partie visualisée — d'une ligne L, faisant suite au signal de suppression de ligne contenant l'impulsion de synchronisation pour le déclenchement. Le niveau du créneau est réglé par deux potentiomètres $F'_R$ et $F'_B$ insérés en parallèle entre les bornes complémentaires Q et $\overline{Q}$ du circuit monostable 441 afin de produire deux signaux $DR_2$ et $DB_2$ qui sont appliqués aux entrées des premiers amplificateurs des circuits de commutation $51_R$ et $51_B$ via deux autres fils du bus 430.

Un signal tel que $DR_2$ ou $DB_2$ est montré à la Fig. 5 et est analogue à un signal de différence de couleur sans modulation. Pour la période nominale L d'une ligne, ce signal est au début au niveau noir de référence VN pendant la durée de suppression de ligne SP et est ensuite à un niveau uniforme VU pendant la durée de la partie active PA. Le niveau uniforme VU est réglé par le potentiomètre respectif $F'_R$, $F'_B$ et peut être plus petit ou plus grand que le niveau noir. La différence entre le niveau uniforme et le niveau noir peut varier jusqu'à ± 1 Volt pour un niveau noir égal à 0,3 Volt et un niveau blanc VB égal à 1 Volt.

Dans la Fig. 3, le traitement se poursuit dans les circuits 5, 6 et 3 comme selon la Fig. 1. L'image résultante r' représentée par les signaux de luminance $Y_r$, et de différence de couleur $DR_r$ et $DB_r$ sur le bus 30 sortant des circuits respectifs $31_V$, $31_R$ et $31_B$ de l'incrustateur 3 est analogue à celle r selon la Fig. 1. En d'autres termes, l'image résultante r' a des zones de l'image d'avant-scène dont la couleur initialement « dénaturée » par le bleu parasite du fond f est remplacée par des zones homologues de l'image d'avant-scène p dont les couleurs ont été artificiellement recréées pour harmoniser les couleurs des images d'avant-scène p et d'arrière-scène a au niveau de leur transition.

Comme montré dans les Fig. 1 et 3, dans le système d'incrustation sont prévues plusieurs lignes de retard notamment insérées dans les bus 12, 13, 14, 15 et 21 afin de synchroniser les signaux composants transmis aux entrées des circuits 5, 6 et 3 par les distributeurs vidéos 1 et 2 avec les signaux composants ayant subi des retards dus à leurs traitements précédents dans les circuits respectifs 4 ou 4', 5 et 6.

**Revendications**

1. Système d'incrustation d'images en télévision en couleurs pour combiner des premiers signaux composants ($b_R$, $b_V$, $b_B$) représentatifs d'une image composite (b) d'une avant-scène (p) et d'un fond (f) et des seconds signaux composants ($a_R$, $a_V$, $a_B$) représentatifs d'une image d'arrière-scène (a) en des signaux composants ($r_R$, $r_V$, $r_B$) représentatifs d'une image (r) résultant de l'incrustation de l'image d'avant-scène (p) dans l'image d'arrière scène (a), ledit système comprenant des premiers moyens (3) pour incruster une image (I) issue de l'image d'avant-scène (p) dans l'image d'arrière-scène (a) en fonction (32) des différences de couleurs de l'image d'avant-scène (p) et du fond (f), caractérisé en ce qu'il comprend des moyens (4) pour combiner des proportions prédéterminées ($f_R$, $f_V$, $f_B$) de premiers signaux composants ($b_R$, $b_V$, $b_B$) avec une proportion prédéterminée ($f_S$) de l'un des seconds signaux composants ($a_R$, $a_V$, $a_B$) en des troisièmes signaux composants ($LR_2$, $LV_2$, $LB_2$) et des seconds moyens (5) pour incruster l'image représentée par les troisièmes signaux composants ($LR_2$, $LV_2$, $LB_2$) dans l'image d'avant-scène (b) en des signaux composants ($I_R$, $I_V$, $I_B$) représentatifs de ladite image (I) issue de l'image d'avant-scène (p) en fonction (52) des différences de couleurs de l'image d'avant-scène (p) et du fond (f).

2. Système conforme à la revendication 1, caractérisé en ce que les moyens de combinaison (4) comprennent des premiers moyens ($410_R$, $410_V$, $410_B$) pour multiplier les premiers signaux composants ($b_R$, $b_V$, $b_B$) par des facteurs de proportion respectifs ajustables ($f_R$, $f_V$, $f_B$), des moyens (411) pour mélanger les signaux composants sortant des premiers moyens de multiplication, des moyens (422) pour sélectionner l'un ($a_S$) desdits seconds signaux composants ($a_R$, $a_V$, $a_B$), des seconds moyens (423) pour multiplier le second signal composant sélectionné ($a_S$) par un facteur de proportion ajustable ($f_S$), et des moyens (421) pour additionner les signaux ($L_1$ ; $f_S a_S$) sortant des moyens de mélange (411) et des seconds moyens de multiplication (423) en un signal de luminance ($L_2$) correspondant aux troisièmes signaux composants ($LR_2$, $LV_2$, $LB_2$).

3. Système conforme à la revendication 2, caractérisé en ce que les moyens de combinaison (4) comprennent des troisièmes moyens ($431_R$, $431_V$, $431_B$) pour multiplier ledit signal de luminance ($L_2$) par des facteurs de proportion ajustables ($F_R$, $F_V$, $F_B$) en lesdits troisièmes signaux composants ($LR_2$, $LV_2$, $LB_2$).

4. Système conforme à la revendication 1, caractérisé en ce que les moyens de combinaison (4') comprennent des moyens (422') pour sélectionner l'un ($Y_a$) desdits seconds signaux composants ($Y_a$, $DR_a$, $DB_a$), des moyens (423') pour multiplier le second signal sélectionné ($Y_a$) par un facteur de proportion ajustable ($f'_S$), des moyens (421') pour additionner l'un ($Y_b$) desdits premiers signaux composants et le signal ($f'_S Y_a$) sortant des moyens de multiplication (423') en un troisième signal composant ($Y_2$), des moyens (44) recevant le signal de synchronisation de ligne pour générer deux signaux ayant chacun une amplitude qui est au niveau noir de référence (VN) pendant la durée de suppression de ligne (SP) et à un niveau uniforme adjustable (VU) pendant la durée de la partie active de ligne (PA), et constituant les deux autres troisièmes signaux composants ($DR_2$, $DB_2$).

5. Système conforme à la revendication 4, caractérisé en ce que les moyens (44) pour générer lesdits deux autres troisièmes signaux composants ($DR_2$, $DB_2$) comprennent un circuit monostable (441) qui est déclenché par le signal de synchronisation de ligne et deux potentiomètres ($F'_R$, $F'_B$) insérés en parallèle entre les sorties complémentaires ($Q$, $\bar{Q}$) du circuit monostable (44) afin d'ajuster les niveaux uniformes desdits deux autres troisièmes signaux composants ($DR_2$, $DB_2$).

6. Système conforme à la revendication 4 ou 5, caractérisé en ce que les moyens de combinaison (4') comprennent des moyens (426) pour multiplier le signal ($Y_b + f'_S Y_a$) sortant des moyens d'addition (42') par un facteur de proportion ajustable ($F'_V$) en ledit troisième signal composant ($Y_2$).

7. Système conforme à l'une des revendications 1 à 6, caractérisé en ce qu'il comprend des moyens (6) pour mélanger les signaux composants ($I_R$, $I_V$, $I_B$) sortant des seconds moyens d'incrustation (5) respectivement avec les premiers signaux composants ($b_R$, $b_V$, $b_B$) en lesdits signaux composants ($M_R$, $M_V$, $M_B$) représentatifs de ladite image (M) issue de l'image d'avant-scène (p).

8. Système conforme à la revendication 7, caractérisé en ce que les moyens de mélange (6) selon la revendication 7 comprennent pour chaque couple de signaux composants ($I_R$, $b_R$ ; $I_V$, $b_V$ ; $I_B$, $b_B$) à mélanger, des seconds moyens pour multiplier le premier signal composant du couple ($b_R$, $b_V$, $b_B$) par un facteur ajustable ($g_R$ ; $g_V$ ; $g_B$), des premiers moyens pour multiplier le signal composant du couple ($I_R$, $I_V$, $I_B$) sortant des seconds moyens d'incrustation (5) par un facteur ($1 - g_R$ ; $1 - g_V$ ; $1 - g_B$) qui est le complément à 1 du facteur ajustable, et des moyens pour mélanger les signaux sortant des premiers et seconds moyens de multiplication en le signal composant respectif ($M_R$ ; $M_V$ ; $M_B$) représentatif de ladite image (M) issue de l'image d'avant-scène (p).

9. Système conforme à l'une des revendications 1 à 8, caractérisé en ce que les premiers (3) et seconds (5) moyens d'incrustation sont identiques.

## Claims

1. Colour television picture inlay system for combining first component signals ($b_R$, $b_V$, $b_B$) representative of a composite picture (b) of a foreground scene (p) and a backing (f) and second component signals ($a_R$, $a_V$, $a_B$) representative of a background scene picture (a) into component signals ($r_R$, $r_V$, $r_B$) representative of a picture (r) resulting from the inlay of the foreground scene (p) with the background scene (a), said system comprising first means (3) for inlaying a picture (I) derived from the foreground scene picture (p) with the background scene picture (a) in terms (32) of the colour differences between the foreground scene picture (p) and the backing (f), characterized in that it comprises means (4) for combining predetermined proportions ($f_R$, $f_V$, $f_B$) first component signals ($b_R$, $b_V$, $b_B$) with a predetermined proportion ($f_S$) of one of the second component signals ($a_R$, $a_V$, $a_B$) into third component signals ($LR_2$, $LV_2$, $LB_2$) and second means (5) for inlaying the picture represented by the third component signals ($LR_2$, $LV_2$, $LB_2$) with the foreground scene picture (b) into component signals ($I_R$, $I_V$, $I_B$) representative of said picture (I) derived from the foreground scene picture (p) in terms (52) of the colour differences between the foreground scene picture (p) and the backing (f).

2. System according to claim 1, characterized in that the combining means (4) comprises first means ($410_R$, $410_V$, $410_B$) for multiplying said first component signals ($b_R$, $b_V$, $b_B$) by respective adjustable proportion factors ($f_R$, $f_V$, $f_B$), means (411) for mixing the component signals outputting from the first multiplying means, means (422) for selecting one ($a_S$) of said second component signals ($a_R$, $a_V$, $a_B$), second means (423) for multiplying the second selected component signal ($a_S$) by an adjustable proportion factor ($f_S$), and means (421) for adding the signals ($L_1$ ; $f_S a_S$) outputting from the mixing means (411) and second multiplying means (423) into a luminance signal ($L_2$) corresponding to the third component signals ($LR_2$, $LV_2$, $LB_2$).

3. System according to claim 2, characterized in that the combining means (4) comprise third means ($431_R$, $431_V$, $431_B$) for multiplying said luminance signal ($L_2$) by adjustable proportion factors ($F_R$, $F_V$, $F_B$) into said third component signals ($LR_2$, $LV_2$, $LB_2$).

4. System according to claim 1, characterized in that the combining means (4') comprise means (422') for selecting one ($Y_a$) of said second component signals ($Y_a$, $DR_a$, $DB_a$), means (423') for multiplying the selected second component signal ($Y_a$) by an adjustable proportion factor ($f'_S$), means (421') for adding one ($Y_b$) of said first component signals and the signal ($f'_S Y_a$) outputting from the multiplying means (423') into a third component signal ($Y_2$), means (44) receiving a line synchronizing signal for deriving two signals each having an amplitude that is at the black reference level (VN) during the line blanking interval (SP) and at an adjustable steady level (VU) throughout the line active portion (PA), and constituting the other two third component signals ($DR_2$, $DB_2$).

5. System according to claim 4, characterized in that the other two third component signal deriving means (44) comprise a monostable circuit (441) triggered by the line synchronizing signal, and two potentiometers ($F'_R$, $F'_B$) parallel-connected between complementary outputs (Q, $\overline{Q}$) of the monostable circuit (44) so as to adjust the steady levels of said other two third component signals ($DR_2$, $DB_2$).

6. System according to claim 4 or 5, characterized in that the combining means (4') comprises means (426) for multiplying the signal ($Y_b + f'_S Y_a$) outputting from the adding means (42') by an adjustable proportion factor ($F'_V$) into said third component signal ($Y_2$).

7. System according to one of claims 1 to 6, characterized in that it comprises means (6) for mixing the component signals ($I_R$, $I_V$, $I_B$) outputting from the second inlaying means (5) respectively with the first component signals ($b_R$, $b_V$, $b_B$) into said component signals ($M_R$, $M_V$, $M_B$) representative of said picture (M) derived from the foreground scene picture (p).

8. System according to claim 7, characterized in that the mixing means (6) according to claim 7 comprise for each pair of component signals ($I_R$, $b_R$ ; $I_V$, $b_V$ ; $I_B$, $b_B$) to be mixed, second means for multiplying the first component signal of the pair ($b_R$, $b_V$, $b_B$) by an ajustable factor ($g_R$ ; $g_V$ ; $g_B$), first means for multiplying the component signal of the pair ($I_R$, $I_V$, $I_B$) outputting from the second inlaying means (5) by a factor $(1 - g_R ; 1 - g_V ; 1 - g_B)$ that is 1's complement of the adjustable factor, and means for mixing the signals outputting from the first and second multiplying means into the respective component signal $(M_R ; M_V ; M_B)$ representative of said picture (M) derived from the foreground scene picture (p).

9. The system according to one of claims 1 to 8, characterized in that said first (3) and second (5) inlaying means are identical.

**Patentansprüche**

1. Farbfernseh-Bildeinblendsystem, um erste Komponentensignale $(b_R, b_V, b_B)$, die ein aus einer Vordergrundszene (p) und einem Fond (f) zusammengesetztes Bild (b) darstellen, und zweite Komponentensignale $(a_R, a_V, a_B)$, die ein Bild einer Hintergrundszene (a) darstellen, zu Komponentensignalen $(r_R, r_V, r_B)$ zusammenzusetzen, die einem Bild (r) entsprechen, das aus der Einblendung des Vordergrundszenenbildes (p) in das in das Hintergrundszenenbild (a) entsteht, wobei das Bildeinblendsystem erste Mittel (3) aufweist, um ein aus dem Vordergrundszenenbild (p) stammendes Bild (I) als Funktion (32) der Farbdifferenzen zwischen dem Vordergrundszenenbild (b) und dem Fond (f) in das Hintergrundszenenbild (a) einzublenden, dadurch gekennzeichnet, daß das Bildeinblendsystem Mittel (4) aufweist, um bestimmte Anteile $(f_R, f_V, f_B)$ der ersten Komponentensignale $(b_R, b_V, b_B)$ mit einem bestimmten Anteil $(f_S)$ von einem der zweiten Komponentensignale $(a_R, a_V, a_B)$ zu dritten Komponentensignalen $(LR_2, LV_2, LB_2)$ zusammenzusetzen und zweite Mittel (5), um das von den dritten Komponentensignalen $(LR_2, LV_2, LB_2)$ dargestellte Bild in das Vordergrundszenenbild (b) einzublenden zu Komponentensignalen $(I_R, I_V, I_B)$, welche das aus dem Vordergrundszenenbild (p) als Funktion (52) der Farbdifferenzen zwischen dem Vordergrundszenenbild (p) und dem Fond (f) stammende Bild (I) darstellen.

2. Bildeinblendsystem nach Anspruch 1, dadurch gekennzeichnet, daß die Mittel (4) zum Zusammensetzen erste Mittel $(410_R, 410_V, 410_B)$ zum Multiplizieren der ersten Komponentensignale $(b_R, b_V, b_B)$ mit jeweils einstellbaren Anteilsfaktoren $(f_R, f_V, f_B)$ aufweisen ; Mittel (411) zum Mischen der Komponentensignale, welche die ersten Mittel zur Multiplikation verlassen ; Mittel (422) um eines $(a_S)$ der zweiten Komponentensignale $(a_R, a_V, a_B)$ auszuwählen ; zweite Mittel (423) zum Multiplizieren des ausgewählten zweiten Komponentensignals $(a_S)$ mit einem einstellbaren Anteilsfaktor $(f_S)$ und Mittel (421) um die die Mittel (411) zum Mischen und die zweiten Mittel zum Multiplizieren (423) verlassenden Signale $(L_1 ; f_S \cdot a_S)$ zu einem Leuchtdichtesignal zu addieren, welches den dritten Komponentensignalen $(LR_2, LV_2, LB_2)$ entspricht.

3. Bildeinblendsystem nach Anspruch 2, dadurch gekennzeichnet, daß die Mittel (4) zum Zusammensetzen dritte Mittel $(431_R, 431_V, 431_B)$ aufweisen, um das Leuchtdichtesignal $(L_2)$ mit den einstellbaren Anteilsfaktoren $(F_R, F_V, F_B)$ zu den dritten Komponentensignalen $(LR_2, LV_2, LB_2)$ zu multiplizieren.

4. Bildeinblendsystem nach Anspruch 1, dadurch gekennzeichnet, daß die Mittel zum Zusammensetzen (4') Mittel (422') aufweisen, um eines $(Y_a)$ der zweiten Komponentensignale $(Y_a, DR_a, DB_a)$ auszuwählen ; Mittel (423') zum Multiplizieren des ausgewählten zweiten Signals $(Y_a)$ mit einem einstellbaren Anteilsfaktor $(f'_S)$ ; Mittel (421'), um das eine $(Y_b)$ der ersten Komponentensignale und das die Mittel zum Multiplizieren (423') verlassende Signal $(f'_S Y_a)$ zu einem dritten Komponentensignal $(Y_2)$ zu addieren ; Mittel (44), welche das Zeilensynchronisations-Signal empfangen, um zwei Signale zu erzeugen, die beide während der Dauer des Zeilenrücklaufs (SP) eine Amplitude auf dem Niveau der Referenzdunkelheit (VN) und während der aktiven Phase der Zeile (PA) ein einheitliches einstellbares Niveau (VU) aufweisen und die beiden anderen dritten Komponentensignale $(DR_2, DB_2)$ bilden.

5. Bildeinblendsystem nach Anspruch 4, dadurch gekennzeichnet daß, die Mittel (44) zum Erzeugen der beiden anderen dritten Komponentensignale $(DR_2, DB_2)$ einen durch das Zeilensynchronisations-Signal getriggerten monostabilen Schaltkreis (441) und und zwei zu den komplementären Ausgängen (Q, $\bar{Q}$) des monostabilen Schaltkreises (441) parallel geschaltete Potentiometer $(F'_R, F'_B)$ zum Einstellen der beiden anderen dritten Komponentensignale $(DR_2, DB_2)$ auf gleiche Niveaus aufweisen.

6. Bildeinblendsystem nach Anspruch 4 oder 5, dadurch gekennzeichnet, daß die Mittel zum Zusammensetzen (4') Mittel (426) enthalten, um das die Mittel zum Addieren (42') verlassende Signal $(Y_b + f'_S \cdot Y_a)$ mit einem einstellbaren Anteilsfaktor $(F'_V)$ zum dritten Komponentensignal $(Y_2)$ zu multiplizieren.

7. Bildeinblendsystem nach einem der vorhergehenden Ansprüche 1 bis 6, dadurch gekennzeichnet, daß es Mittel (6) aufweist, um die die zweiten Mittel zum Einblenden (5) verlassenden Komponentensignale $(I_R, I_V, I_B)$ mit den ersten Komponentensignalen $(b_R, b_V, b_B)$ zu den Komponentensignalen $(M_R, M_V, M_b)$ zu mischen, welche das aus dem Vordergrundszenenbild (p) stammende Bild (M) darstellen.

8. Bildeinblendsystem nach Anspruch 7, dadurch gekennzeichnet, daß die Mittel zum Mischen (6) gemäß Anspruch 7 für jedes Paar zu mischender Komponentensignale $(I_R, b_R ; I_V, b_V ; I_B, b_B)$ zweite Mittel zum Multiplizieren des ersten Komponentensignals eines Paares $(b_R, b_V, b_B)$ mit einem einstellbaren Faktor $(g_R, g_V, g_B)$, erste Mittel zum Multiplizieren des die zweiten Mittel zum Einblenden (5) verlassenden Komponentensignales des Paares $(I_R, I_V, I_B)$ mit einem Faktor $(1 - g_R, 1 - g_V, 1 - g_B)$. der den einstellbaren Faktor zu 1 ergänzt, und Mittel aufweisen zum Mischen der die ersten und zweiten

8

Mittel zum Multiplizieren verlassenden Signale zu dem jeweiligen Komponentensignal ($M_R$, $M_V$, $M_B$), welches das aus dem Vordergrundszenenbild (p) stammende Bild (M) darstellt.

9. Bildeinblendsystem nach einem der vorhergehenden Ansprüche 1 bis 8, dadurch gekennzeichnet, daß die ersten (3) und zweiten (5) Mittel zur Bildeinblendung einander gleich sind.

FIG.1

# FIG.2

CCT DE TRAITEMENT 4

CCT D'ADDITION

CCT DE COMBINAISON 41

SELECTEUR DE COULEUR 42

REPETEUR-ATTENUATEUR 43

# FIG.4

CCT D'ADDITION 42' — CCT DE TRAITEMENT 4'

LIGNE DE RETARD

SELECTEUR DE COULEUR 422'

CCT DE GENERATION DE COULEURS UNIFORMES 44

DECLENCHEMENT 440

MONOSTABLE 441

# FIG.5

SYNC

Tension

$DR_2$ ou $DB_2$

temps

3

FIG.3